# EUROPEAN PATENT APPLICATION

(11) **EP 3 416 123 A1**
(43) Date of publication of application: **19.12.2018**
(21) Application number: 17176399.8
(22) Date of filing: 16.06.2017
(51) Int. Cl.: G06Q 20/40

(54) **SYSTEM FOR IDENTIFICATION OF FRAUDULENT TRANSACTIONS**

(71) Applicant: KBC Groep NV, 1080 Brussel (BE)
(72) Inventor: Knutsson, Albert, 2800 Mechelen (BE); Chizi, Barak, 1150 Woluwe (BE)
(74) Representative: Brantsandpatents bvba

(57) **Abstract**

The current invention relates to a computing system for identification of fraudulent transactions, said computing system comprising a server, the server comprising a processor, tangible non-volatile memory, program code present on said memory for instructing said processor, optionally a network interface; at least one computer-readable medium, the at least one computer-readable medium comprising a database, said database comprising historical data of at least one transacting entity, said historical data comprising a value of at least one feature relating to said at least one transacting entity; a plurality of signal definitions, each signal definition defining a signal output as function of one or more features relating to said at least one transacting entity; said computing system configured for carrying out a method for generating fraud-indicative data, said fraud-indicative data comprising a score, said method comprising a plurality of steps.

## Description

### Technical field

The invention pertains to the technical field of systems for detecting fraud in financial transactions.

### Background

Existing fraudulent transaction detection systems may use transaction data in addition to data related to the transacting entities to identify fraud. Such systems may operate in either batch (processing transactions as a group of files at periodic times during the day) or real time mode (processing transactions one at a time, as they enter the system). Typically, the system identifies transactions with high risk of being fraudulent, which are manually investigated by a user, typically a domain expert, on a daily basis. However, the fraud detection capabilities of existing systems have not kept pace with either the types of fraudulent activity that have evolved or increasing processing and storage capabilities of computing systems.

There remains a need in the art for an improved system for identification of fraudulent transactions. The user working with current systems and methods is confronted with the excessively time consuming process of manually investigating too many false positives, while missing some of the fraudulent transactions because the system is unable to detect them.

US 7,668,769 discloses a system and method of detecting fraud in transaction data such as payment card transaction data. One embodiment includes a computerized method of detecting that comprises receiving data associated with a financial transaction and at least one transacting entity, wherein the data associated with the transacting entity comprises at least a portion of each of a plurality of historical transactions of the transacting entity, applying the data to at least one first model, generating a score based on the first model, and generating data indicative of fraud based at least partly on the score. Other embodiments include systems and methods of generating models for use in fraud detection systems.

US 2015/0046302 discloses a method that involves receiving transaction data regarding a financial transaction, such that the transaction data includes a transaction attribute. A customer level target specific variable layer is generated from the transaction data through a processor. The cardholder behavior is modeled with the customer level target specific variable layer to create a model of cardholder behavior through the processor. The model of cardholder behavior is saved to a non-transitory computer-readable storage medium.

US 6,330,546 discloses an automated system and method that detects fraudulent transactions using a predictive model such as a neural network to evaluate individual customer accounts and identify potentially fraudulent transactions based on learned relationships among known variables. The system may also output reason codes indicating relative contributions of various variables to a particular result. The system periodically monitors its performance and redevelops the model when performance drops below a predetermined level.

A problem with systems and methods according to US 7,668,769, US 2015/0046302 and US 6,330,546 is that they are too complex and lack transparency in their operation. Moreover, they lack means for benchmarking results obtained from the system according to a first model to those of another system or to those of the same system obtained according to a second model.

US 2016/0125424 discloses a method that involves implementing at least one rule for dynamically identifying accounts as being illegitimate based on some of a feature metrics and threshold values. An unidentified account absent is received from a set of accounts. The one or more assessment metrics is calculated based at least in part on the feature metrics determined for each account in the set. The unidentified account as being illegitimate is identified based on the at least one rule when the one or more assessment metrics satisfy the at least some of the threshold values.

A problem with the method according to US 2016/0125424 is that it is not directed at the identification of fraudulent financial transactions but rather to the identification of illegitimate accounts in an online (social network) context. As such, US 2016/0125424 does not disclose means to identify fraudulent transactions *an sich.* Related, many of the key features and feature metrics relevant to identification of fraudulent transactions go unmentioned in US 2016/0125424.

The present invention aims to resolve at least some of the problems mentioned above.

### Summary of the invention

In a first aspect, the present invention provides computing system for identification of fraudulent transactions, said computing system comprising
- a server, the server comprising a processor, tangible non-volatile memory, program code present on said memory for instructing said processor, optionally a network interface;
- at least one computer-readable medium, the at least one computer-readable medium comprising a database, said database comprising
   - historical data of at least one transacting entity, said historical data comprising a value of at least one feature relating to said at least one transacting entity;
   - a plurality of signal definitions, each signal definition defining a signal output as function of one or more features relating to said at least one transacting entity;
said computing system configured for carrying out a method for generating fraud-indicative data, said fraud-indicative data comprising a score, said method comprising the steps of:
(a) providing data of a current transaction to said server;
(b) identifying one or more current transacting entities relating to said current transaction by said server based on said data of said current transaction;
(c) obtaining historical data of said one or more current transacting entities together with said plurality of signal definitions from said database;
(d) applying one or more of said plurality of signal definitions to said current transaction and said historical data relating to said one or more current transacting entities, obtaining a signal vector comprising a plurality of signal values;
(e) applying at least one scoring model to said signal vector for generating said fraud-indicative data;
wherein said fraud-indicative data comprises at least one associated score for each scoring model; wherein said signal vector obtained in step (d) comprises a plurality of Boolean signal values; and wherein each of said at least one scoring model applied in step (e) is applied to the same signal vector obtained in step (d).

The advantage of such a system lies in its high accuracy, along with its increased usability and manageability from the perspective of the user operating the system. The use of data of the current transaction along with historical data regarding relevant related transacting entities desirably has been found to provide better predictive performance than merely using summarized or averaged data. Hereby, the considerable complexity brought about by working with historical data and by the application of at least one scoring model is kept manageable by adequate organization. Particularly, historical data is handled in step (c) and (d) and thereby precedes the application of the at least one scoring model in step (d). Hereby, each of the at least one scoring model applied in step (e) is applied to the same signal vector obtained in step (d). The fact that a common signal vector is used is helpful to the user since it provides a solid basis for a fair comparison between different scoring models. The scoring models, in themselves, are applied generically and interchangeably, without impacting the way in which the historical data is processed. What is further helpful to the user is that at least part of the signal vector and preferably the entire signal vector concerns Boolean signal values, making the input of the at least one scoring model more predictable, and making it feasible for a user to gain familiarity with the typical behavior of several scoring models and comparing them "on an equal footing". Related, the scoring models are also on an equal footing in the sense that each of the at least one scoring model produces at least one associated score, preferably a single score, further facilitating said comparison.

In a second aspect, the present invention provides a system according to the present invention for identification of fraudulent transactions by a user, wherein the system comprises a means for alerting said user when the system determines a system-assigned label indicating that the transaction requires manual inspection by said user, said means for alerting comprising any or any of the following: a sound alarm, a visual alarm, haptic feedback, a push notification to a mobile device of said user. This is advantageous since it allows a convenient allocation of tasks, whereby straightforward tasks are handled by the system, while more delicate tasks and decisions are kept within the control of a user. Overall, this reduces the burden on the user in the task of supervising transactions and detecting fraudulent transactions.

In a third aspect, the present invention provides a ranking produced by the system according to the present invention, said ranking comprising a visualization either on said screen or on a print-out of said visualization; said ranking comprising for each scoring model a list of a plurality of current transactions, each of said current transactions visualized with an associated score determined by said system. The advantages hereof are similar to those offered by the system.

Further embodiments and their advantages are discussed in the detailed description and the conclusions.

### Description of figures

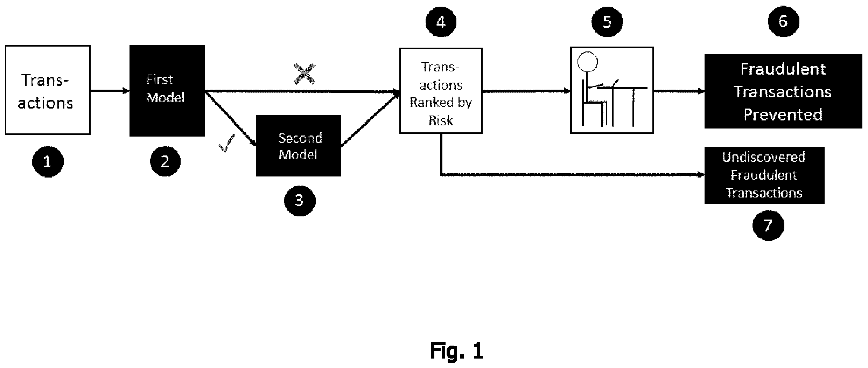

**Figure 1** illustrates an example workflow relating to the present invention.

### Detailed description of the invention

In this document, "financial transactions" and "transactions" are used interchangeably. Transaction data refers to transactions, authorization of transactions, external data and other activities such as non-monetary transactions, payments, postings or cardless cash withdrawal events. Hereby, a transaction may concern any payment or related action with the final intent of generating a transaction from a sender to a recipient, and thus comprises all payment card transactions, as well as transactions originating from actions performed via a web page on a computer and/or via a mobile app on a mobile device. Moreover, payment card transaction data may include data derived from transactions using a physical payment card, e.g., with a magnetic stripe, and electronic transactions in which payment card data is used without the payment card being physically read or presented, such as cardless cash or an online payment by credit card without requiring chip identification or any other type of physical verification of the presence of the card. Financial transactions can include credit or debit based transactions associated with, for example, a point of sale (POS) terminal or an automated teller machine (ATM). These transactions are often aggregated into databases from which an analysis can be performed for fraud.

Furthermore, in this document, fraudulent transactions originate from the action of a party responsible for said fraud, generically referred to as "fraudster". One type of fraudster is the "cyber-criminal" performing an important part of its fraudulent activities online. This is to be distinguished from the generic terms "sender", "beneficiary", "card user" and "account user", which all refer to parties associated with a transaction, comprising both legitimate parties and fraudsters.

The scoring models mentioned in this document may be based on any suitable modeling technique. Accordingly, in yet another embodiment of the system, the at least one scoring model may comprise gradient boosting machine, random forest, support vector machines (SVM), neural networks, cascades (which may significantly improve performance for real-time referrals if trained on fraud transaction tags (identifying training transactions as fraudulent) rather than fraud account tags (identifying accounts as being used fraudulently)), genetic algorithms (GA), fuzzy logic, fraud case-based reasoning, decision trees, naïve Bayesian, logistic regression, and scorecards.

The at least one scoring model may be supervised (i.e., with fraud tagging of the training data) or unsupervised (i.e., without fraud tags). In one embodiment of the system according to a supervised approach, the system allows the user to add user-assigned labels while using the system, which are subsequently added to the training data. This allows training of the scoring model and the system at runtime. In a related embodiment with a supervised approach which may optionally be combined with said approach with user-assigned labels, the training data is provided beforehand and the model is trained and configured at least partly before it is used. The unsupervised scoring models can help identify new fraud trends by identifying accounts and transactions that are diverging from legitimate behavior, but that do not diverge in a way previously identified. The unsupervised models may be for instance be based on one or more of clustering (e.g., K-means or Mahalanobis distance based models), anomaly (or outlier) detection (e.g., isolation forest or compression neural networks), competitive learning (e.g., Kohonen self-organizing maps) and one-class support vector machine (SVM).

While a large number of scoring models may run concurrently on the system, it is a desired outcome that a limited number of models, e.g. one, two or three, are identified as providing superior performance, either taken alone or in their combination, and therefore "elected" as best options. Preferably, these scoring models have fewer inputs than typical monolithic models, and they can be refreshed or retrained much more efficiently. If it is desirable to retrain a particular scoring model, such retraining can be performed without retraining the other scoring models. In a preferred embodiment, the system comprises a first and a second scoring model. Hereby, the first scoring model preferably represents an approach that is familiar to and well-understood by the user of the system, with known strengths and weaknesses, whereas the second scoring model preferably concerns a newer scoring model of which the performance can be assessed by comparing its results to those of the first scoring model. The present invention is particularly suitable for this type of experimental comparison, given that each of said at least one scoring model applied in step (e) is applied to the same signal vector obtained in step (d). The fact that a common signal vector is used is helpful to the user since it provides a solid basis for a fair comparison between different scoring models. This a fortiori holds true for the part of the signal vector that concerns Boolean signal values, making the input of the at least one scoring model more predictable, and making it feasible for a user to gain familiarity with the typical behavior of each scoring model.

The present invention concerns a computing system according to claim 1.

In a preferred embodiment, the signal vector obtained in step (d) consists of a plurality of Boolean signal values. Hereby, all signals take on only two different states as signal values, preferably "0" or "1". This is advantageous since it facilitates the user and makes the use of an advanced model manageable. For instance, it allows to first apply a known and/or simple scoring model suitable to be applied to such a signal vector, and use this as a benchmark for the present system. Also, it allows to apply and compare two different scoring models belonging to the system in a transparent and generic way.

In another preferred embodiment, said at least one scoring model comprises at least a first scoring model and a second scoring model different from said first scoring model; and said first and said second model applied in step (e) are applied independently to the same signal vector obtained in step (d). This has the advantage that a user may apply two different scoring models of which for instance one is known and another one is under test. By applying these independently, maximal transparency is obtained, with generic application of several scoring models whose exact number may be chosen freely. In a related alternative embodiment, the at least one scoring model concerns a plurality of scoring models which are applied concurrently in step (e) and generate said fraud-indicative data in a mutually dependent manner. One example of such a setting is where a third scoring model uses the scores generated by a first and second scoring model and chooses a mode of calculation conditioned by these scores. Hereby, the third scoring model may use a simple weighting to combine the scores of the first and second scoring model, but may also follow a less trivial path. In one embodiment, a first and second scoring model provide scores which are combined by a third scoring model according to a weighting determined by a fourth scoring model. Such an embodiment may be preferably applied to reduce the burden on the user, who is preferably confronted with only a very limited number of scoring models and associated scores, e.g. 1 or 2.

According to another preferred embodiment, said one or more current transaction entities identified in step (b) comprise at least any or any combination of the following: a device used to execute said current transaction, a sender, a beneficiary, a transaction date, a transaction channel, a location of said sender. This is advantageous since each of said transaction entities is highly determining when assessing whether a transaction is fraudulent, especially in their combination. Moreover, each of said possible transaction entities is in itself quite general and may be related to a lot of historical data. In this regard, the mentioned transaction entities are particularly suitable for use in the system according to the present invention, in which historical data is advantageously utilized. Note that not all mentioned transaction entities are necessarily distinct and/or present for each transaction. For instance, in the case of a card user withdrawing cash, the card user is both sender and beneficiary at the same time. Also in the example of an account user withdrawing cash at a counter with the help of a clerk or by means of a signed bank transfer form, the account user is both sender and beneficiary. Also, note that in some cases some data relating to a transaction may be missing, which however should not impede the determination of whether said transaction is fraudulent.

In another preferred embodiment of the invention, said one or more current transaction entities identified in step (b) comprises at least a sender, and the application of said plurality of signal definitions in step (d) is done for a plurality of features relating to said sender, said plurality of features comprising at least any or any combination of the following: age, gender, income level, civil status, transaction pattern over time, geographic transaction pattern, first use of IP address, first use beneficiary account, first use of said device used to execute said current transaction or of app running on said device, first use of fingerprint within a payment app, previous transfer between own accounts, first transaction after enrolment, cardless cash after enrolment, cardless cash after limit increase, first use of cardless cash, transaction after request login ID, first use of easy PIN reset, first use language of client, limited use of internet service provider. Hereby, cardless cash refers to a bank service whereby a card user withdraws cash without requiring the physical presence of the associated card. Furthermore, said request for said login ID may refer to an account name in the context of a web application or an app on a mobile device or any other identification of a sender and/or a device of a sender used for the current transaction. Furthermore, an easy PIN reset may refer to a way of restoring access to or signing within the context of an application/app. Such restoral may be intended for a sender forgetting such a PIN, e.g. a four-, five- or six-digit PIN, wherein said easy reset may be enabled by identification via a mobile phone number. Since an assumed fraudster may have taken hold of the mobile phone of a sender, it may be easy to perform such an easy PIN reset, and therefore, a corresponding feature/signal should be identified.

In yet another embodiment, said one or more current transaction entities identified in step (b) comprises at least a transaction date, wherein the application of said plurality of signal definitions in step (d) is done for a plurality of features relating to said transaction date comprising at least any or any combination of the following: a time of the day and weekday, a seasonal feature for distinguishing e.g. Christmas or summer holidays, a current weather, simultaneousness of a fraud-relevant event such as a version release date of Kali Linux, an external indicator of cyber-criminality relating to said transaction date. This is advantageous since timing information is readily available and may be correlated to a number of factors. Preferably data regarding the transaction date is used in combination with the location of the sender, more preferably in combination with an external indicator of cyber-criminality relating to said transaction date and/or said location, since this may enable identifying "crime waves" or to identify a "batch" of fraudulent actions performed by the same fraudster or group of fraudsters. Related, preferably data regarding the transaction date is used in combination with an external indicator of cyber-criminality relating to said transaction date to identify crime waves of cyber-criminality, which is in many cases characterized rather by a certain timeframe than by location.

According to another embodiment, said one or more current transaction entities identified in step (b) comprises at least a location of said sender, wherein said location of said sender is preferably obtained and/or verified via GNSS data and/or telecom data and wherein the application of said plurality of signal definitions in step (d) is done for a plurality of features relating to said location of said sender comprising at least any or any combination of the following: a local area crime rate, a local area unemployment rate, an external indicator of cyber-criminality relating to said location. Hereby, GNSS stands for global navigation satellite system and generically refers to a broad class of localization service systems comprising e.g. GPS, Galileo, Glonass and Beidou. Hereby, it is useful to retrieve the location via telecom data if it cannot be retrieved through other means or if there is uncertainty regarding the correctness of the location as indicated by e.g. GPS localization of a mobile device of the sender. As mentioned elsewhere in this document, preferably, location data is used in combination with data regarding the transaction date as this provides superior identification of so-called crime waves.

In another embodiment, for each scoring model, said fraud-indicative data further comprises at least one associated scoring threshold, wherein step (e) comprises comparing, for each scoring model, said associated score and said associated scoring threshold, wherein preferably said score being larger than said scoring threshold is indicative of fraud. This is advantageous since the threshold provides a reference in assessing whether a given score is excessively large or not. In particular, the use of several concurrent scoring models may give rise to confusion regarding whether a single score from one of the models should be perceived as large or not. Therefore, it may be advantageous to let any score be accompanied by an associated threshold. This allows to see whether the scoring model labels the transaction as fraudulent or not (if the threshold is exceeded), and furthermore allows to see to what extent the threshold is exceeded. In general, if more than one scoring model is used, this allows for better comparison across different associated scores and/or normalization with respect to each associated threshold, e.g. by rescaling each score to a range between 0 and 1 with some pre-determined threshold in-between.

According to an embodiment, said signal vector obtained in step (d) preferably consists of a plurality of Boolean signal values, wherein said at least one scoring model comprises a weight-based scoring model, and wherein said step (e) comprises the following sub-steps:
(e.1) for each signal value belonging to said signal vector, determining an associated weight by means of said weight-based scoring model;
(e.2) determining a sum of weights based on a sum of terms, each of said terms obtained as a product of said signal value and said associated weight;
(e.3) determining said score based at least partly on said sum of weights;
wherein said weight-based scoring model preferably concerns a statistical model taking into account at least one correlation between two different signal values belonging to said signal vector. This is advantageous because it yields a transparent framework for score calculation, particularly in the preferred embodiment wherein said signal vector consists of a plurality of Boolean signal values.

In a further embodiment, said at least one scoring model comprises a gradient boosting machine model and/or a random forest model and/or a support vector machine model. This is advantageous since each of the mentioned model types is suitable for the specific aim of detection of fraudulent transactions.

In another embodiment, for each scoring model, said fraud-indicative data further comprises at least one associated scoring threshold; wherein step (e) comprises comparing, for each scoring model, said associated score and said associated scoring threshold; wherein said system further comprises a screen for display to a user; wherein said current transaction concerns a plurality of current transactions; and wherein said method comprises further step (f) following said step (e):
(f) for each scoring model, determining and displaying on said screen a ranking of said plurality of current transactions ordered according to said score; wherein for each transaction a system-assigned label is determined and displayed, said system-assigned label indicating whether the transaction is deemed fraudulent and/or whether the transaction requires manual inspection by said user; said determining of said system-assigned label based at least partly on said score being larger than said scoring threshold.

This is advantageous since it facilitates automation. Particularly, it allows an efficient and convenient allocation of tasks, whereby straightforward tasks are handled by the system, while more delicate tasks and decisions are kept within the control of a user. Overall, this reduces the burden on the user in the task of supervising transactions and detecting fraudulent transactions.

In yet another embodiment, said system further comprises a user input interface for receiving input from said user; and wherein said method comprises further step (g) following said step (f):
(g) for at least one current transaction belonging to said plurality of current transactions, receiving a user-assigned label indicating whether the user deems said at least one current transaction fraudulent, wherein said user-assigned label differs from the system-assigned label of at least one scoring model determined in step (f).

This is advantageous since it facilitates further automation and enhances interaction between the user and the system. This allows for an even more efficient and convenient allocation of tasks, whereby delicate tasks and decisions are within the control of a user, further reducing the burden on the user in the task of supervising transactions and detecting fraudulent transactions.

In an embodiment, at least one of said at least one model concerns a supervised learning model comprising training data, wherein step (g) further comprises adding said at least one current transaction for which said user-assigned label differs from the system-assigned label to said training data. This has the advantage that the user may actually contribute to the modification of the scoring model, yielding a more accurate scoring model and overall system. This, in its turn, may further reduce the burden on the user in his/her task of detecting fraudulent transactions.

In yet another embodiment, said at least one computer-readable medium comprises a remote computer-readable medium not belonging to said server, wherein the server comprises a network interface for accessing said remote computer-readable medium. This corresponds e.g. to a situation where the server accesses one or more remote data services to receive portions of said historical data.

The invention is further described by the following non-limiting examples which further illustrate the invention, and are not intended to, nor should they be interpreted to, limit the scope of the invention.

The present invention will be now described in more details, referring to examples that are not limitative.

### Example: example workflow

Figure 1 illustrates an example workflow relating to the present invention, with reference signs (1)-(7) referred to accordingly below. Data on current transactions (1) is fed to the system. The system comprises a first model module (2) which processes the current transactions according to a first, signal-based alert model, i.e. a cyber risk scoring model and ranks all transactions. Hereby, the signal vector concerns a vector of Boolean signal values, and the cyber risk scoring model is weight-based and statistical, taking into account correlations between different signal values. The system further comprises a second model module (3) which reprioritizes the list of alerted transactions. Hereby, note that the second model module (3) may use the output of the first model module (2) and thus work together with the first model in a dependent fashion, but may as well work independently from the first model module (2), whereby the same signal vector used by the first model module (1) is taken as input by the second model module (2).

Hereby, the second model concerns a machine learning model, e.g. gradient boosting machine, random forest or support vector machine. A specific example is a random forest algorithm in which 100 or 1000 fairly deep decision trees are used to classify a transaction as low risk or high risk transaction. The second model can reprioritize the list of transactions and put the true frauds higher up in the list, thus increasing the efficiency of the manual work made by the domain experts, and optimally allowing them to identify truly fraudulent transactions that they otherwise would have missed due to time restrictions. Hereby, the second model uses the same signal vector as the first model, defining combinations of signals that are too complex to identify by human. The second model calculates a new risk score, which determines the new rank of the transaction. The model learns from historical events (list of triggered signals and whether the transaction was identified as a true fraud or not).

The output of the second module model (3) is a list of transactions ranked by risk (4). The transactions with highest rank are manually investigated by the domain expert (5). Actions are taken to prevent the discovered fraud (6). The number of fraudulent events which are undiscovered (7), due to low rank, has been decreased by running the second model on top of the first model.

## Claims

1. A computing system for identification of fraudulent transactions, said computing system comprising
- a server, the server comprising a processor, tangible non-volatile memory, program code present on said memory for instructing said processor, optionally a network interface;
- at least one computer-readable medium, the at least one computer-readable medium comprising a database, said database comprising
- historical data of at least one transacting entity, said historical data comprising a value of at least one feature relating to said at least one transacting entity;
- a plurality of signal definitions, each signal definition defining a signal output as function of one or more features relating to said at least one transacting entity;
said computing system configured for carrying out a method for generating fraud-indicative data, said fraud-indicative data comprising a score, said method comprising the steps of:
(a) providing data of a current transaction to said server;
(b) identifying one or more current transacting entities relating to said current transaction by said server based on said data of said current transaction;
(c) obtaining historical data of said one or more current transacting entities together with said plurality of signal definitions from said database;
(d) applying one or more of said plurality of signal definitions to said current transaction and said historical data relating to said one or more current transacting entities, obtaining a signal vector comprising a plurality of signal values;
(e) applying at least one scoring model to said signal vector for generating said fraud-indicative data;
wherein said fraud-indicative data comprises at least one associated score for each scoring model; wherein said signal vector obtained in step (d) comprises a plurality of Boolean signal values; and wherein each of said at least one scoring model applied in step (e) is applied to the same signal vector obtained in step (d).

2. The computing system according to claim 1, wherein said signal vector obtained in step (d) consists of a plurality of Boolean signal values.

3. The computing system according to claims 1-2, wherein said at least one scoring model comprises at least a first scoring model and a second scoring model different from said first scoring model; and wherein said first and said second model applied in step (e) are applied independently to the same signal vector obtained in step (d).

4. The computing system according to claims 1-3, wherein said one or more current transaction entities identified in step (b) comprise at least any or any combination of the following: a device used to execute said current transaction, a sender, a beneficiary, a transaction date, a transaction channel, a location of said sender.

5. The computing system according to claims 1-4, wherein said one or more current transaction entities identified in step (b) comprises at least a sender, and wherein the application of said plurality of signal definitions in step (d) is done for a plurality of features relating to said sender, said plurality of features comprising at least any or any combination of the following: age, gender, income level, civil status, transaction pattern over time, geographic transaction pattern, first use of IP address, first use beneficiary account, first use of said device used to execute said current transaction or of app running on said device, first use of fingerprint within a payment app, previous transfer between own accounts, first transaction after enrolment, cardless cash after enrolment, cardless cash after limit increase, first use of cardless cash, transaction after request login ID, first use of easy PIN reset, first use language of client, limited use of internet service provider.

6. The computing system according to claims 1-5, wherein said one or more current transaction entities identified in step (b) comprises at least a transaction date, and wherein the application of said plurality of signal definitions in step (d) is done for a plurality of features relating to said transaction date comprising at least any or any combination of the following: a time of the day and weekday, a seasonal feature for distinguishing e.g. Christmas or summer holidays, a current weather, simultaneousness of a fraud-relevant event such as a version release date of Kali Linux, an external indicator of cyber-criminality relating to said transaction date.

7. The computing system according to claims 1-6, wherein said one or more current transaction entities identified in step (b) comprises at least a location of said sender, wherein said location of said sender is preferably obtained and/or verified via GNSS data and/or telecom data and wherein the application of said plurality of signal definitions in step (d) is done for a plurality of features relating to said location of said sender comprising at least any or any combination of the following: a local area crime rate, a local area unemployment rate, an external indicator of cyber-criminality relating to said location.

8. The computing system according to claims 1-7, wherein for each scoring model said fraud-indicative data further comprises at least one associated scoring threshold, and wherein step (e) comprises comparing, for each scoring model, said associated score and said associated scoring threshold, wherein preferably said score being larger than said scoring threshold is indicative of fraud.

9. The computing system according to claims 1-8, wherein said signal vector preferably consists of a plurality of Boolean signal values, wherein said at least one scoring model comprises a weight-based scoring model, and wherein said step (e) comprises the following sub-steps:
(e.1) for each signal value belonging to said signal vector, determining an associated weight by means of said weight-based scoring model;
(e.2) determining a sum of weights based on a sum of terms, each of said terms obtained as a product of said signal value and said associated weight;
(e.3) determining said score based at least partly on said sum of weights;
wherein said weight-based scoring model preferably concerns a statistical model taking into account at least one correlation between two different signal values belonging to said signal vector.

10. The computing system according to claim 1-9, wherein said at least one scoring model comprises a gradient boosting machine model and/or a random forest model and/or a support vector machine model.

11. The computing system according to claim 8-10, wherein for each scoring model said fraud-indicative data further comprises at least one associated scoring threshold; wherein step (e) comprises comparing, for each scoring model, said associated score and said associated scoring threshold; wherein said system further comprises a screen for display to a user; wherein said current transaction concerns a plurality of current transactions; and wherein said method comprises further step (f) following said step (e):
(f) for each scoring model, determining and displaying on said screen a ranking of said plurality of current transactions ordered according to said score; wherein for each transaction a system-assigned label is determined and displayed, said system-assigned label indicating whether the transaction is deemed fraudulent and/or whether the transaction requires manual inspection by said user; said determining of said system-assigned label based at least partly on said score being larger than said scoring threshold.

12. The computing system according to claim 11, wherein said system further comprises a user input interface for receiving input from said user; and wherein said method comprises further step (g) following said step (f):
(g) for at least one current transaction belonging to said plurality of current transactions, receiving a user-assigned label indicating whether the user deems said at least one current transaction fraudulent, wherein said user-assigned label differs from the system-assigned label of at least one scoring model determined in step (f).

13. The computing system according to claim 12, wherein at least one of said at least one model concerns a supervised learning model comprising training data, and wherein step (g) further comprises adding said at least one current transaction for which said user-assigned label differs from the system-assigned label to said training data.

14. Use of a system according to claims 11-13 for identification of fraudulent transactions by a user, wherein the system comprises a means for alerting said user when the system determines a system-assigned label indicating that the transaction requires manual inspection by said user, said means for alerting comprising any or any of the following: a sound alarm, a visual alarm, haptic feedback, a push notification to a mobile device of said user.

15. A ranking produced by the system according to claims 11-13, said ranking comprising a visualization either on said screen or on a print-out of said visualization; said ranking comprising for each scoring model a list of a plurality of current transactions, each of said current transactions visualized with an associated score determined by said system.
